# FASCICULE DE BREVET EUROPEEN

(11) **EP 2 823 957 B1**
(45) Date de publication et mention de la délivrance du brevet: **06.09.2017**
(21) Numéro de dépôt: 14176186.6
(22) Date de dépôt: 08.07.2014
(51) Int. Cl.: B30B 9/06, A23N 1/00, A47J 19/02, C12G 1/00

(54) **Dispositif de pressoir**
Pressenvorrichtung
Press device

(30) Priorité: 10.07.2013 FR 1356762; 30.08.2013 FR 1358296; 03.10.2013 FR 1359573
(43) Date de publication de la demande: 14.01.2015
(73) Titulaire: Les Pressoirs Coquard, 51430 Bezannes (FR)
(72) Inventeur: Masset, Jean-Pierre, 51100 REIMS (FR)
(74) Mandataire: Rhein, Alain

(56) Documents cités:
- WO-A1-01/74182
- WO-A2-2006/080041
- WO-A2-2008/054829
- DE-A1- 3 543 135
- FR-A1- 2 565 597
- FR-A5- 2 098 912

## Description

La présente invention a pour objet un dispositif de pressoir à fruits, et plus particulièrement à raisins.

On sait que dans des périodes de grande chaleur, les fruits pressurés peuvent être à une température élevée, par exemple supérieure à 30°C, et que dans ce cas le moût peut fermenter, ce qui est préjudiciable au jus.

Pour pallier cet inconvénient, notamment dans le cas du raisin, on réalise de plus en plus fréquemment des vendanges nocturnes, et plus particulièrement en fin de nuit lorsque le raisin est revenu à bonne température, ou bien on stocke la vendange en chambre frigorifique avant l'opération de pressurage, mais ces manières de procéder sont toutefois fastidieuses et plus coûteuses, notamment en terme de main d'oeuvre.

On utilise également des cuves de stockage équipées de moyens de réfrigération internes ou externes, ou de moyens de transfert réfrigérés, tous ces moyens consistant en des échangeurs à fluide caloporteur.

Le principal inconvénient de ce système est essentiellement le coût puisqu'il faut équiper toutes les cuves ou au moins une grande partie de celles-ci.

On notera qu'il existe également des appareils, comme celui décrit dans le document WO 2006/080041, permettant de réaliser des boissons froides issues du pressurage de fruits ou de légumes, et qui comprend une phase d'injection de gaz dans le moût afin de refroidir celui-ci et le rendre immédiatement consommable. On comprendra qu'un tel appareil est réservé à la production de très petites quantités de liquide produit, et est limité à un usage domestique.

On connaît également, au travers du document WO 2008/054829, un appareil pour la fabrication du vin. Il comprend des moyens de pressurage, des moyens de filtration, ainsi qu'une cuve de stockage associée à des moyens permettant de réfrigérer ou de chauffer le contenu de ladite cuve. Cet appareil permet de reproduire à très petite échelle, de manière domestique, le processus de vinification. Cet appareil est donc conforme aux procédés précédemment évoqués, qui consiste à utiliser des cuves réfrigérées. Le document WO 01/74182-A1 décrit un dispositif de pressoir selon le préambule de la revenication 1. La présente invention a pour but de proposer un dispositif de pressoir convenant pour le pressurage de fruits, et plus particulièrement de raisins, permettant de remédier aux inconvénients précités, et cela quel que soit le type de pressoir.

Le dispositif de pressoir convenant pour le pressurage de fruits, et plus particulièrement de raisins, selon l'invention, est définit par la revendication 1. Selon une caractéristique additionnelle du dispositif de pressoir selon l'invention, les moyens de réfrigération consistent en un échangeur disposé sous le fond de l'enceinte, et connecté à un groupe de réfrigération.

Selon une autre caractéristique additionnelle du dispositif de pressoir selon l'invention, la paroi plane du fond sur laquelle s'écoule le moût, consiste en la tôle supérieure de deux tôles parallèles qui délimitent un espace dans lequel circule un liquide froid.

Selon une autre caractéristique additionnelle du dispositif de pressoir selon l'invention, les deux tôles sont entretoisées par des chicanes qui créent un chemin sinueux parcouru par le liquide froid.

Selon une variante, la paroi plane du fond sur laquelle s'écoule le moût, ferme un réservoir rempli d'un liquide et dans lequel serpente un conduit de circulation d'un liquide refroidi.

Le dispositif de pressoir selon l'invention n'est pas limité à une architecture particulière du pressoir, il est adaptable à tous les types de pressoir. Il peut par exemple se présenter sous la forme d'un kit destiné à être rapporté sur un pressoir existant.

En pratique le groupe de réfrigération transporte un fluide frigoporteur dont la température est de l'ordre de 0 à 2°C.

De manière avantageuse, en s'écoulant sur le fond de l'enceinte en un film, le moût issu du pressurage est suffisamment refroidi pour éviter une fermentation.

L'obtention de moûts à 10-15°C permet d'accélérer le débourbage, à titre d'exemple, le gain de temps est de 50% par rapport à un débourbage de moûts à 20-25°C.

De plus, la température basse des moûts permet, lorsqu'ils sont reversés dans des cuves réfrigérées, de n'utiliser ces dernières que pour le maintien à température, et non pour abaisser celle-ci à la température souhaitée, ce qui limite substantiellement les coûts.

De manière avantageuse, plusieurs dispositifs de pressoir selon l'invention peuvent être connectés à un même groupe de réfrigération.

Les avantages et les caractéristiques du dispositif de pressoir selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en élévation d'un dispositif de pressoir selon l'invention.
- la figure 2 représente une vue schématique en perspective avec écorché partiel, d'une partie du même dispositif de pressoir.

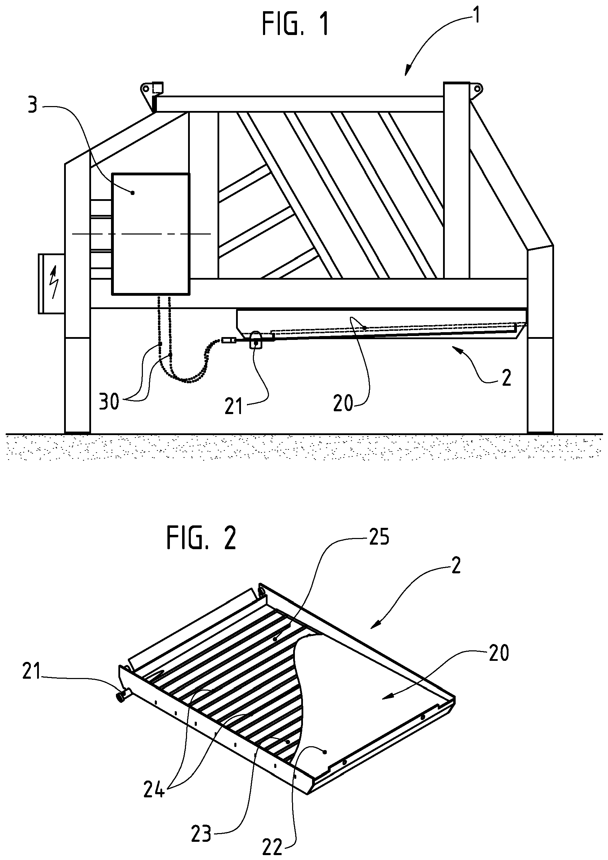

En référence à la figure 1, on peut voir un dispositif de pressoir 1 selon l'invention. Il comporte inférieurement une maie 2 destinée à collecte du moût, laquelle présente un fond 20 incliné, destiné à permettre l'écoulement de ce moût et son évacuation par un nez 21 disposé au point bas.

Selon l'invention, le fond 20 est réfrigéré afin de refroidir le moût.

Dans le mode de réalisation représenté, comme cela est visible sur la figure 2, le fond 20 de la maie 2 est constitué de plaques de tôle parallèles 22 et 23 entretoisées par des chicanes 24 qui créent un chemin 25 parcouru par un liquide froid.

Le liquide froid, qui peut être de l'eau froide glycolée par exemple, est issu d'un groupe de froid 3 visible sur la figure 1, et qui en l'occurrence est incorporé au dispositif de pressoir 1.

Le groupe de froid 3 est connecté à la maie 2 au travers de tuyaux 30, en sorte d'y créer une circulation du liquide froid, et maintenir la tôle supérieure 22 à basse température.

L'inclinaison du fond 20, plus particulièrement celle de la tôle supérieure 22, est choisie, en fonction des caractéristiques du pressoir, pour que le moût s'y écoule en un film régulier, de manière que le refroidissement soit optimal.

Dans une variante non représentée, le fond 20 constitue la paroi supérieure d'un réservoir rempli de liquide, de l'eau glycolée par exemple, et dans lequel réservoir serpente un conduit de liquide refroidi.

## Revendications

1. Dispositif de pressoir (1), convenant pour le pressurage de fruits, et plus particulièrement de raisins, comportant en aval de la zone de pressurage, au niveau des moyens d'évacuation du moût, une enceinte (2) comprenant un fond (20) disposé dans le prolongement desdits moyens d'évacuation et en amont de moyens de transfert dudit moût vers des moyens de stockage, **caractérisé en ce que** ledit fond (20) comprend supérieurement une paroi plane inclinée (22), dont l'inclinaison par rapport à l'horizontale est choisie pour permettre l'écoulement du moût par gravité en un film ou rideau liquide ; et **en ce que** ledit fond (20) est associé à des moyens de réfrigération (3, 30, 25) conçus aptes à refroidir ladite paroi plane (22) sur laquelle s'écoule ledit moût.

2. Dispositif de pressoir (1) selon la revendication 1, **caractérisé en ce que** les moyens de réfrigération consistent en un échangeur (22, 23, 24) disposé sous le fond (20) de l'enceinte (2), et connecté à un groupe de réfrigération (3).

3. Dispositif de pressoir (1) selon l'une quelconque des revendications précédentes, **caractérisé en ce que** la paroi plane (22) du fond (20) sur laquelle s'écoule le moût, consiste en la tôle supérieure (22) de deux tôles parallèles (22, 23) qui délimitent un espace dans lequel circule un liquide froid.

4. Dispositif de pressoir (1) selon la revendication 3, **caractérisé en ce que** les deux tôles (22, 23) sont entretoisées par des chicanes (24) qui créent un chemin sinueux (25) parcouru par le liquide froid.

5. Dispositif de pressoir (1) selon l'une quelconque des revendications 1 à 2, **caractérisé en ce que** la paroi plane (22) du fond (20) sur laquelle s'écoule le moût, ferme un réservoir rempli d'un liquide et dans lequel serpente un conduit de circulation d'un liquide refroidi.

## Patentansprüche

1. Pressvorrichtung (1) für das Pressen von Früchten und insbesondere von Trauben, aufweisend nach der Presszone im Bereich der Mostableitungsmittel eine Umschließung (2), umfassend einen Boden (20), der in Verlängerung der Ableitungsmittel angeordnet ist, und vor Weiterleitungsmitteln des Mosts zu Speichermitteln, **dadurch gekennzeichnet, dass** der Boden (20) oben eine geneigte ebene Wand (22) umfasst, deren Neigung in Bezug zur Horizontalen gewählt ist, um das Fließen des Mosts durch Schwerkraft als flüssiger Film oder Vorhang zu erlauben; und dass der Boden (20) Kühlmitteln (3, 30, 25) zugeordnet ist, die ausgebildet sind, dass sie in der Lage sind, die ebene Wand (22) zu kühlen, auf der der Most fließt.

2. Pressvorrichtung (1) nach Anspruch 1, **dadurch gekennzeichnet, dass** die Kühlmittel aus einem Tauscher (22, 23, 24) bestehen, der unter dem Boden (20) der Umschließung (2) angeordnet und an eine Kühleinheit (3) angeschlossen ist.

3. Pressvorrichtung (1) nach einem der vorangehenden Ansprüche, **dadurch gekennzeichnet, dass** die ebene Wand (22) des Bodens (20), auf welcher der Most fließt, aus einem oberen Blech (22) und zwei parallelen Blechen (22, 23) besteht, die einen Raum begrenzen, in welchem eine kalte Flüssigkeit zirkuliert.

4. Pressvorrichtung (1) nach Anspruch 3, **dadurch gekennzeichnet, dass** die zwei Bleche (22, 23) mit Schikanen (24) ausgestrebt sind, die einen gewundenen Weg (25) bilden, der von der kalten Flüssigkeit zurückgelegt wird.

5. Pressvorrichtung (1) nach einem der Ansprüche 1 bis 2, **dadurch gekennzeichnet, dass** die ebene Wand (22) des Bodens (20), auf welcher der Most fließt, ein mit einer Flüssigkeit gefülltes Reservoir schließt und in welchem sich eine Zirkulationsleitung einer gekühlten Flüssigkeit schlängelt.

## Claims

1. A press device (1), suitable for pressing fruit, particularly grapes, **characterized in that** it comprises, downstream from the pressing zone, at the must discharge means, an enclosure (2) comprising a bottom (20) arranged in the extension of said discharge means and upstream from means for transferring said must to storage means, **characterized in that** said bottom (20) upwardly comprises a planar inclined wall (22), whose inclination relative to the horizontal is chosen to allow the must to flow by gravity in a film or liquid curtain; and **in that** said bottom (20) is associated with refrigeration means (3, 30, 25) designed to be capable of cooling said planar wall (22) over which said must flows.

2. The press device (1) according to claim 1, **characterized in that** the refrigeration means consist of an exchanger (22, 23, 24) arranged below the bottom (20) of the enclosure (2), and connected to a refrigeration unit (3).

3. The press device (1) according to any one of the preceding claims, **characterized in that** the planar wall (22) of the bottom (20) on which the must flows, consists of the upper sheet (22) of two parallel sheets (22, 23) that define a space in which a cold liquid circulates.

4. The press device (1) according to claim 3, **characterized in that** the two sheets (22, 23) are spaced apart by baffles (24) that create a winding path (25) traveled by the cold liquid.

5. The press device (1) according to any one of claims 1 to 2, **characterized in that** the planar wall (22) of the bottom (20) on which the must flows closes a reservoir filled with a liquid and in which a circulation pipe for a cooled liquid winds.
